# EUROPÄISCHE PATENTANMELDUNG

(11) **EP 1 876 518 A2**
(43) Veröffentlichungstag der Anmeldung: **09.01.2008**
(21) Anmeldenummer: 07011748.6
(22) Anmeldetag: 15.06.2007
(51) Int. Cl.: G06F 3/042

(54) **Optische Sensoreinrichtung**

(30) Priorität: 07.07.2006 DE 102006031468
(71) Anmelder: RAFI GmbH & Co. KG, 88190 Ravensburg (DE)
(72) Erfinder: Beutler, Detlef, 88250 Weingarten (DE); Klein, Alfred, 88255 Baienfurt (DE)
(74) Vertreter: Engelhardt, Volker

(57) **Zusammenfassung**

Bei einer optischen Sensoreinrichtung (1) zur Übertragung und Umwandlung von Bewegungen in elektrische Steuersignale, durch die ein elektrisch betriebenes Gerät bedienbar ist, mit einer dem Gerät zugeordneten lichtdurchlässigen Sensorplatte (11) und mit einer Vielzahl von Sende- und Empfangsdioden (5, 6), durch die die Bewegungen auf der Sensorplatte (11) erfassbar und in Steuersignale für die Bedienung des Gerätes umwandelbar sind, soll auf konstruktiv einfache Art und Weise eine Zuordnung von verschiedenen Schaltmöglichkeiten in einem elektrischen Gerät gegeben ist und die zur Verfügung stehenden Betätigungsfelder (12, 13) sind andersartigen Eingabeaufforderungen für den Betrieb des elektrischen Gerätes zugeordnet.

Dies wird dadurch erreicht, dass die Sensorplatte (11) mindestens zwei Betätigungsfelder (12, 13) aufweist, die in unterschiedlichen Höhenlagen angeordnet sind, und dass jedem Betätigungsfeld (12, 13) eine bestimmte Anzahl von Sende- und Empfangsdioden (5, 6) zugeordnet ist.

## Beschreibung

Die Erfindung bezieht sich auf eine optische Sensoreinrichtung zur Übertragung und Umwandlung von Bewegungen in elektrische Signale nach den Merkmalen im Oberbegriff des Patentanspruches 1.

Es ist beispielsweise bekannt, zur Steuerung und Bedienung von Computern eine Cursorsteuerung zu verwenden, die im Tastenfeld des Computers integriert ist. Die derart eingesetzte Cursorsteuerung besteht üblicherweise aus einer Sensorplatte, die aus einem lichtdurchlässigen Material gefertigt ist. Die Sensorplatte wird beispielsweise von einem Finger eines Menschen oder einem Stift berührt. Die auf der Sensorplatte durchgeführten Bewegungen werden durch im Inneren des Computers untergebrachte Sende- und Empfangsdioden gemessen, die der Sensorplatte zugeordnet sind und durch entsprechende Softwareprogramme und/oder einen Mikroprozessor in die Cursorbewegungen umgewandelt. Die Bewegungsrichtung des Fingers bzw. des Stiftes entspricht demnach den gewünschten Auslenkungen des Cursors auf dem Bildschirm des Computers.

Als nachteilig bei einer solchen optischen Sensoreinrichtung hat sich herausgestellt, dass lediglich die Bewegung eines Cursors übertragbar ist, durch den das elektrische Gerät, also der Computer, von außen bedient werden kann. Sobald beispielsweise ein Schaltvorgang erfolgen soll, kann dieser nur durch die Aktivierung einer bestimmten Taste durchgeführt werden. Die Sensorplatte ist nämlich ortsfest im Gehäuse des Computers angebracht. Die auf der Sensorplatte durchgeführten Bewegungen können demnach lediglich einem einzigen bestimmten Steuerungsorgan für die Bedienung des elektrischen Gerätes zugeordnet werden. Jede weitere zusätzliche Steuereingabe ist über eine andersartig ausgestaltete Funktionstaste durchzuführen.

Es ist daher Aufgabe der Erfindung, eine optische Sensoreinrichtung der eingangs genannten Gattung zur Verfügung zu stellen, mittels der auf konstruktiv einfache Art und Weise eine Zuordnung von verschiedenen Schaltmöglichkeiten in einem elektrischen Gerät gegeben ist und mittels der unterschiedliche Betätigungsfelder zur Verfügung gestellt sind, die andersartigen Eingabeaufforderungen für den Betrieb des elektrischen Gerätes zugeordnet sind.

Diese Aufgabe wird erfindungsgemäß durch die Merkmale des kennzeichnenden Teils im Patentanspruch 1 gelöst.

Weitere vorteilhafte Weiterbildungen der Erfindung ergeben sich aus den Unteransprüchen.

Dadurch, dass die beiden Betätigungsfelder in unterschiedlichen Höhenlagen angeordnet sind, kann vom Benutzer eine eindeutige Zuordnung des jeweiligen Betätigungsfeldes zu einem bestimmten Schaltvorgang bzw. Eingabesteuerungsprozess vorgenommen werden. Des Weiteren sind die derart angeordneten Betätigungsfelder leicht zugänglich, so dass eine Bewegung auf dem jeweiligen Betätigungsfeld erfolgen kann, ohne dass dabei eine parallel zeitgleich durchgeführte Bewegung auf dem anderen Betätigungsfeld behindert wird. Die Bewegung auf einem der beiden Betätigungsfelder wird demnach von den unmittelbar darunter angeordneten Sende-und Empfangsdioden ermittelt und durch die derart erzeugten elektrischen Signale in Bewegungskoordinaten umgewandelt, mittels denen die Bedienung des elektrischen Gerätes von außen durchführbar ist, und zwar für unterschiedliche Eingabefunktionen.

Darüber hinaus baut eine solche Anordnung sehr klein, denn die zur Verfügung stehende Fläche wird räumlich erweitert und daher in einer zusätzlichen Dimension ausgenutzt.

Es ist besonders vorteilhaft, wenn die einzelnen Betätigungsfelder in unterschiedliche Bereiche unterteilt sind und diese beispielsweise durch Leuchtdioden verschiedenartig ausgeleuchtet werden, so dass jedes Bedienfeld eine bestimmte Farbe aufweist. Dies vereinfacht die Bedienung der optischen Sensoreinrichtung.

In der Zeichnung ist ein erfindungsgemäßes Ausführungsbeispiel dargestellt, das nachfolgend näher erläutert wird. Im Einzelnen zeigt:
- Figur 1: eine optische Sensoreinrichtung, bestehend aus einer Sensorplatte, die zwei Betätigungsfelder aufweist und einer in einem Gehäuse untergebrachten Leiterplatte, auf der eine Vielzahl von Sende- und Empfangsdioden angeordnet sind, in Seitenansicht und
- Figur 2: die Sensoreinrichtung gemäß Figur 1 in Draufsicht.

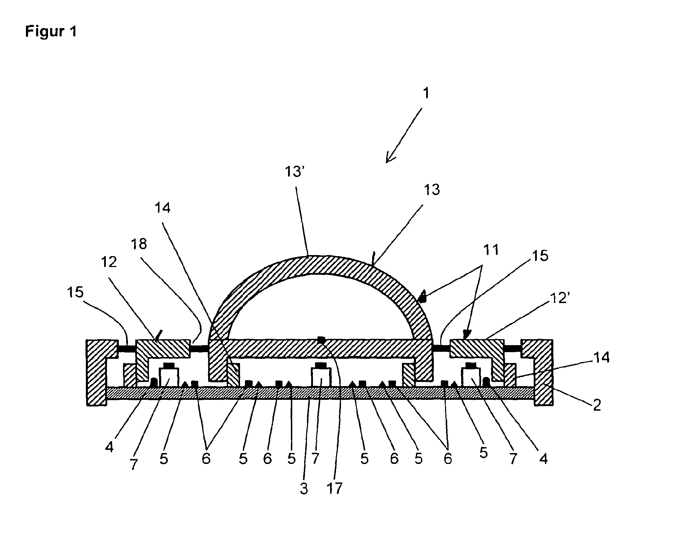

In Figur 1 ist eine optische Sensoreinrichtung 1 zur Übertragung und Umwandlung von Bewegungen in elektrische Steuersignale dargestellt, durch die ein elektrisch betriebenes Gerät, beispielsweise ein Computer oder eine Werkzeugmaschine, manuell bedienbar sein soll. Die Bewegungen werden durch einen Finger einer menschlichen Hand oder durch ein dafür geeignetes Werkzeug ausgeführt.

Die optische Sensoreinrichtung 1 besteht dabei aus einem Gehäuse 2, dessen Boden von einer Leiterplatte 3 gebildet wird. Auf der Leiterplatte 3 sind eine Vielzahl von Leuchtdioden 4, Sendedioden 5 und Empfangsdioden 6 angeordnet und in entsprechender Weise, beispielsweise mit einem Mikroprozessor, verschaltet. Des Weiteren sind auf der Leiterplatte 3 fünf Schaltelemente 7 vorgesehen, die einen von der Leiterplatte 3 abstehenden Betätigungskopf aufweisen.

Die Außenkontur des Gehäuses 2 ist kreisförmig ausgebildet. Im Inneren des Gehäuses 2 ist eine angebrachte Sensorplatte 11 angebracht, die durch das Gehäuse 2 abgestützt ist und die aus zwei nachfolgend näher erläuterten Betätigungsfeldern 12 und 13 besteht. Die Sensorplatte 11 ist aus einem lichtdurchlässigen Material gefertigt, so dass die von den Sendedioden 5 emittierten Lichtstrahlen auf der Oberfläche der Sensorplatte 11 durch die Bewegungen des Fingers reflektiert und von den Empfangsdioden 6 in an und für sich bekannter Weise aufgenommen werden. Durch die entsprechende Verschaltung der Sende- und Empfangsdioden 5 und 6 auf der Leiterplatte 3 können demnach die Bewegungen auf der Oberfläche der Sensorplatte 11 erfasst und in elektrische Signale zur Bedienung des an die Leiterplatte 3 angeschlossenen elektrischen Gerätes eingesetzt werden.

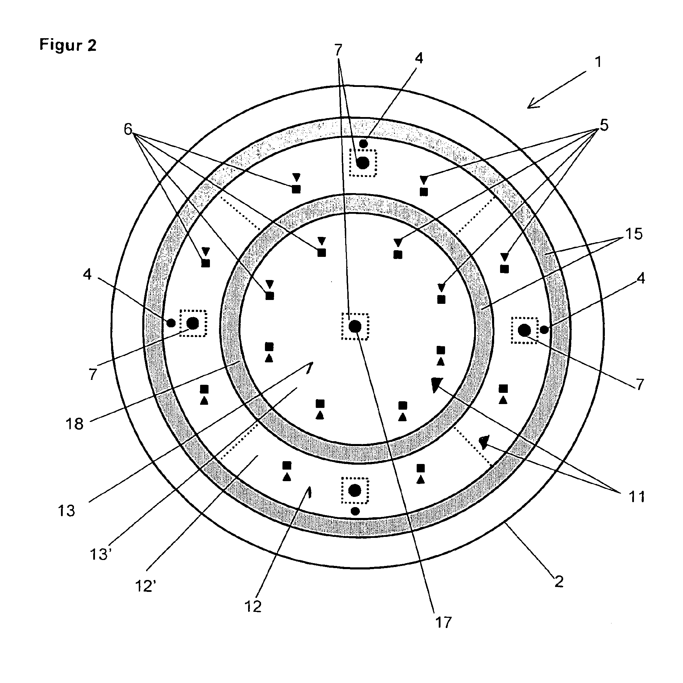

Aus den Figuren 1 und 2 kann der konstruktive Aufbau der Sensorplatte 11 entnommen werden. Das erste Betätigungsfeld 12 der Sensorplatte 11 ist als Kreis ausgebildet und in vier Kreissegmente 12' unterteilt, die unabhängig voneinander in axialer Richtung, also in Richtung der Schaltelemente 7 und der Leiterplatte 3 bewegt werden können. Zur Führung der vier Kreissegmente 12' ist auf der Leiterplatte 3 ein ringförmiger Führungssteg 14 vorgesehen. Die Leuchtdioden 4, die unterhalb der Kreissegmente 12' angebracht sind, emittierten unterschiedliche Lichtwellen, so dass die einzelnen Kreissegmente 12' farblich andersartig ausgeleuchtet sind. Jedem der vier Kreissegmente 12' kann somit eine unterschiedliche Farbgebung zugeordnet werden. Es ist auch denkbar, dass die vier Kreissegmente 12' aus einem unterschiedlich gefärbten lichtdurchlässigen Material gebildet sind, so dass die Leuchtdioden 4 die einzelnen Kreissegmente 12' mit einem einheitlichen Licht ausleuchten, das durch die Farbgebung der einzelnen der Kreissegmente 12' in verschiedene Farben gebrochen wird.

Die vier Kreissegmente 12' bilden folglich das erste Betätigungsfeld 12 der Sensorplatte 11 und liegen in einer gemeinsamen Ebene. Aus dieser Ebene ragt das zweite Betätigungsfeld 13 der Sensorplatte 11, das als domförmige Kappe 13' ausgebildet ist. Demnach liegt die Oberfläche der Kappe 13' in einem höheren Niveau als die vier Kreissegmente 12'.Auf der Leiterplatte 3 sind die Sende- und Empfangsdioden 5 bzw. 6 vorgesehen. Die Kappe 13' besteht ebenfalls aus einem lichtdurchlässigen Material, so dass die von den Sendedioden 5 emittierten Lichtwellen auf der Oberfläche der Kappe 13' durch die Bewegungen eines menschlichen Fingers reflektiert werden und von den Empfangsdioden 6 aufgefangen werden, so dass die Bewegung des Fingers auf der Oberfläche der Kappe 13' in elektrische Steuersignale umwandelbar ist, durch die die Cursorbewegung auf einem Computerbildschirm oder einer Werkzeugmaschine von außen gesteuert werden kann.

Die vier Kreissegmente 12' sind zentrisch um einen Mittelpunkt 17 angeordnet und weisen eine um den Mittelpunkt 17 verlaufende Freisparung 18 auf. Die Kappe 13' ist in die Freisparung 18 eingesetzt. Die Kappe 13' ist als rotationssymmetrischer Körper ausgebildet.

Die Kappe 13' ist ebenfalls in Richtung der Leiterplatte 3 axial beweglich und kann das darunter angeordnete Schaltelement 7 aktivieren.

Sowohl zwischen dem Gehäuse 2 und den vier Kreissegmenten 12' als auch zwischen den vier Kreissegmenten 12' und der Kappe 13' sind flexibel ausgebildete Dichtungen 15 vorgesehen, durch die das Innere des Gehäuses 2 nach außen abgeschlossen ist. Die Dichtungen 15 sind dabei derart ausgestaltet, dass Bewegungen der einzelnen Kreissegmente 12' und der Kappe 13' unabhängig voneinander durchgeführt werden können.

## Patentansprüche

1. Optische Sensoreinrichtung (1) zur Übertragung und Umwandlung von Bewegungen in elektrische Steuersignale, durch die ein elektrisch betriebenes Gerät bedienbar ist, mit einer dem Gerät zugeordneten lichtdurchlässigen Sensorplatte (11) und mit einer Vielzahl von Sende- und Empfangsdioden (5, 6), durch die die Bewegungen auf der Sensorplatte (11) erfassbar und in Steuersignale für die Bedienung des Gerätes umwandelbar sind,
**dadurch gekennzeichnet,**
**dass** die Sensorplatte (11) mindestens zwei Betätigungsfelder(12, 13) aufweist, die in unterschiedlichen Höhenlagen angeordnet sind, und dass jedem Betätigungsfeld (12, 13) eine bestimmte Anzahl von Sende- und Empfangsdioden (5, 6) zugeordnet ist.

2. Sensoreinrichtung nach Anspruch 2,
**dadurch gekennzeichnet,**
**dass** das erste Betätigungsfeld (12) als Ring und das zweite Betätigungsfeld (13) als rotationssymmetrischer Körper ausgebildet ist.

3. Sensoreinrichtung nach Anspruch 1 oder 2,
**dadurch gekennzeichnet,**
**dass** das erste Betätigungsfeld (12) eine Freisparung (18) aufweist, in die das zweite Betätigungsfeld (13) eingesetzt ist.

4. Sensoreinrichtung nach Anspruch 3,
**dadurch gekennzeichnet,**
**dass** das zweite Betätigungsfeld (13) zentrisch zu dem ersten Betätigungsfeld (12) angeordnet ist.

5. Sensoreinrichtung nach einem oder mehreren
der vorgenannten Ansprüche,
**dadurch gekennzeichnet,**
**dass** das erste und das zweite Betätigungsfeld (12, 13) in einem Gehäuse (2) axial beweglich gelagert sind und dass den beiden Betätigungsfeldern (12, 13) jeweils mindestens ein Schaltelement (7) zugeordnet ist, das durch die axiale Bewegung des jeweiligen Betätigungsfeldes (12, 13) aktivierbar ist.

6. Sensoreinrichtung nach einem oder mehreren der
vorgenannten Ansprüche,
**dadurch gekennzeichnet,**
**dass** die Sende- und Empfangsdioden (5, 6) auf einer Leiterplatte (3) zusammengeschaltet sind, dass die einzelnen Sende- und Empfangsdioden (5, 6) gruppenweise den Bereichen der jeweiligen Betätigungsfelder (12, 13) zugeordnet sind und dass die einzelnen Gruppen von Sende- und Empfangsdioden (5, 6) unterschiedliche Steuerbewegungen auf den jeweiligen Betätigungsfeldern (12, 13) erkennen und durch diese eine bestimmte Steuerung des Gerätes ermöglicht ist.

7. Sensoreinrichtung nach einem oder mehreren der vorgenannten Ansprüche,
**dadurch gekennzeichnet,**
**dass** das erste Betätigungsfeld (12) eben und das zweite Betätigungsfeld (13) in seinem Querschnitt dom-, kugel- oder halbkugelförmig ausgebildet ist.

8. Sensoreinrichtung nach einem oder mehreren der vorgenannten Ansprüche,
**dadurch gekennzeichnet,**
**dass** das erste Betätigungsfeld (12) in einzelne Kreissegmente (12') unterteilt ist und
**dass** die einzelnen Kreissegmente (12') unabhängig voneinander axial beweglich sind.

9. Sensoreinrichtung nach einem oder mehreren der vorgenannten Ansprüche,
**dadurch gekennzeichnet,**
**dass** den beiden Betätigungsfeldern (12, 13) eine Vielzahl von Lichtdioden (4) zugeordnet sind und dass die von den Lichtdioden (4) erzeugten Lichtwellen die Betätigungsfelder (12, 13) durchdringen und diese ausleuchten.
